# EUROPÄISCHE PATENTSCHRIFT

(11) **EP 3 942 923 B1**
(45) Veröffentlichungstag und Bekanntmachung des Hinweises auf die Patenterteilung: **25.06.2025**
(21) Anmeldenummer: 21186317.0
(22) Anmeldetag: 19.07.2021
(51) Int. Cl.: A01G 25/16

(54) **AUTOMATISCHE BEWÄSSERUNG EINER FLÄCHE**
AUTOMATIC IRRIGATION OF AN AREA
ARROSAGE AUTOMATIQUE D'UNE SURFACE

(30) Priorität: 23.07.2020 DE 102020119521
(43) Veröffentlichungstag der Anmeldung: 26.01.2022
(73) Patentinhaber: Einhell Germany AG, 94405 Landau / Isar (DE)
(72) Erfinder: THANNHUBER, Markus, 94405 Landau (DE)
(74) Vertreter: Hofstetter, Schurack & Partner

(56) Entgegenhaltungen:
- EP-A1- 3 479 682
- CN-A- 108 446 997
- US-A1- 2011 035 059
- US-A1- 2012 095 604

## Beschreibung

Die vorliegende Erfindung betrifft ein Bewässerungsverfahren sowie ein Bewässerungssystem zur automatischen Bewässerung einer Fläche. Ferner betrifft die Erfindung ein Computerprogrammprodukt.

Die adäquate Versorgung mit Wasser ist Grundvoraussetzung für das Leben und Wachstum von Pflanzen. Dabei ist es wichtig zu beachten, dass sowohl die Unterversorgung als auch die Überversorgung mit Wasser schädlich für die Pflanzen sein kann. Üblicherweise erfolgt die Bewässerung von Rasenflächen oder Pflanzen manuell oder durch manuell aktivierte Vorrichtungen zur Wasserausbringung. Der richtige Zeitpunkt und die richtige Wassermenge müssen also durch einen menschlichen Benutzer von Fall zu Fall individuell bestimmt werden. Dies kann zum einen dazu führen, dass die Wasserversorgung der Pflanzen nicht optimal geschieht. Zudem ist es grundsätzlich wünschenswert, manuelle Tätigkeiten möglichst durch automatisierte Verfahren ersetzen zu können.

Dokument US 2011/0035059 A1 beschreibt ein drahtloses System zur Überwachung von Umwelt-, Boden- oder Klimabedingungen und zur Steuerung von Bewässerungs- oder Klimakontrollsystemen an einem Standort. Das System umfasst ein Sensornetzwerk zur Überwachung von Umwelt-, Boden- oder Klimabedingungen und zur Steuerung eines oder mehrerer Bewässerungs- oder Klimakontrollsysteme, sowie ein Server-Computersystem, das mit dem Sensornetzwerk gekoppelt ist, um Daten von den Sensorknoten zu empfangen und den Betrieb der Sensorknoten zu steuern, wobei das Server-Computersystem auch mit einer von einem Endbenutzer betriebenen Vorrichtung über ein Kommunikationsnetzwerk gekoppelt ist, um die Daten an den Endbenutzer zu übertragen und Fernsteuerungsbefehle oder -abfragen von ihm zu empfangen. Das Server-Computersystem kann einen Bewässerungsplan für den Standort oder bestimmte Zonen an dem Standort auf der Grundlage historischer Evapotranspirationsdaten und Informationen über Pflanzen oder Boden am Standort bestimmen. Andere gattungsgemäße Bewässerungssysteme sind aus EP 3 479 682 A1, US 2012/095604 A1, CN 108 446 997 A und WO 2020 123 606 A1 bekannt.

Vor diesem Hintergrund ist es eine Aufgabe der vorliegenden Erfindung, ein verbessertes Konzept zur Bewässerung einer Fläche anzugeben, gemäß dem die Bewässerung automatisiert erfolgen kann, insbesondere mit einer situationsangepassten Wassermenge.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept beruht auf der Idee, automatisch erfasste, standortabhängige Wetterdaten in ein Verdunstungsmodell einzuspeisen und so den Wasserbedarf für die Fläche zur automatischen Bewässerung zu bestimmen.

Gemäß dem verbesserten Konzept wird ein Bewässerungsverfahren zur automatischen Bewässerung einer Fläche angegeben. Dabei wird, insbesondere mittels eines Rechensystems, ein Standort der Fläche bestimmt und es werden, insbesondere mittels des Rechensystems, automatisch Wetterdaten für den Standort erfasst. Mittels des Rechensystems wird unter Verwendung eines vorgegebenen Verdunstungsmodells abhängig von den Wetterdaten ein Wasserbedarf für die Fläche bestimmt. Die Fläche wird entsprechend dem bestimmten Wasserbedarf automatisch bewässert, insbesondere mittels einer Vorrichtung zur Wasserausbringung. Die Schritte der automatischen Erfassung der Wetterdaten, der Bestimmung des Wasserbedarfs und der Schritt der automatischen Bewässerung der Fläche erfolgen während einer automatischen Bewässerungsphase des Bewässerungsverfahrens. Der automatischen Bewässerungsphase ist eine manuelle Bewässerungsphase vorgelagert. Während der manuellen Bewässerungsphase wird mittels des Rechensystems automatisch ein theoretischer Wasserbedarf für die Fläche bestimmt und eine, insbesondere während der manuellen Bewässerungsphase, manuell auf der Fläche ausgebrachte Wassermenge wird bestimmt. Während der manuellen Bewässerungsphase wird mittels des Rechensystems das Verdunstungsmodell basierend auf dem theoretischen Wasserbedarf und der manuell ausgebrachten Wassermenge erzeugt oder angepasst.

Die Wetterdaten werden insbesondere über einen vorgegebenen Zeitraum, der auch ein gleitender Zeitraum sein kann, automatisch erfasst und insbesondere gespeichert, beispielsweise auf einer Speichereinheit des Rechensystems. Bei den Wetterdaten handelt es sich dabei insbesondere nicht um prognostizierte Wetterdaten für einen zukünftigen Zeitraum, sondern um Wetterdaten betreffend den jeweils aktuellen Zeitpunkt beziehungsweise den Zeitraum, über den hinweg die Wetterdaten erfasst werden. Die Wetterdaten kann das Rechensystem dabei beispielsweise von einem Servercomputer oder einer sonstigen Datenbank, beispielsweise über eine Internetverbindung, von Wetterstationen, Privatpersonen oder kommerziellen Anbietern erhalten.

Die Wetterdaten werden dann von dem Rechensystem als Eingabe für das Verdunstungsmodell verwendet, also mit andren Worten als Eingabe in das Verdunstungsmodell eingespeist. Eine Ausgabe des Verdunstungsmodells entspricht dann dem Wasserbedarf für die Fläche oder eine Größe, aus welcher der Wasserbedarf für die Fläche direkt ermittelt werden kann. Das Verdunstungsmodell kann beispielsweise ein empirisches Modell sein, das abhängig von den Wetterdaten abschätzen kann, welche Wassermenge über welchen Zeitraum pro Flächeneinheit verdunstet und daher über die Bewässerung der entsprechenden nachgeliefert werden sollte.

Die Wetterdaten können beispielsweise Informationen betreffend eine Regen- oder Niederschlagsmenge, eine Windgeschwindigkeit, eine Windrichtung, eine Lufttemperatur und/oder gegebenenfalls weitere wetterbezogene Parameter für den Standort beinhalten. Die Wetterdaten gelten dabei insbesondere für einen geografischen Bereich, wobei der Standort innerhalb dieses Bereichs liegt, sodass sie in diesem Sinne als Wetterdaten für den Standort aufgefasst werden können.

Das Rechensystem kann eine oder mehrere, gegebenenfalls auch räumlich verteilte, Recheneinheiten beinhalten. Beispielsweise kann das Rechensystem eine Serverrecheneinheit beinhalten und eines oder mehrere Endgeräte, wie beispielsweise einen Desktopcomputer oder ein mobiles elektronisches Endgerät, wie etwa ein Notebook, einen Tabletcomputer, ein Mobiltelefon, ein Smartphone oder eine Smartwatch, das mit der Serverrecheneinheit kommunizieren kann, insbesondere drahtlos. Ein solches Endgerät kann dabei unter anderem als Benutzerschnittstelle dienen oder eine Benutzerschnittstelle beinhalten. Die Benutzerschnittstelle kann eine oder mehrere Hardwarekomponenten und eine oder mehrere Softwarekomponenten, beispielsweise in Form von Computerprogrammen oder Applikationen für mobile elektronische Geräte oder dergleichen beinhalten.

Das Rechensystem kann abhängig von dem ermittelten Wasserbedarf insbesondere die Vorrichtung zur Wasserausbringung ansteuern, um die Fläche entsprechend dem ermittelten Wasserbedarf automatisch zu bewässern. Das Bewässern erfolgt dabei insbesondere hinsichtlich einer Menge des auszubringenden Wassers und einem Zeitpunkt oder Zeitraum, zu dem das Wasser ausgebracht wird, entsprechend dem ermittelten Wasserbedarf. Der ermittelte Wasserbedarf kann also insbesondere Informationen betreffend die erforderliche Wassermenge beinhalten und kann auch Informationen betreffend den entsprechenden Zeitpunkt oder Zeitraum, zu dem die Wassermenge ausgebracht werden soll, beinhalten.

Durch die Berücksichtigung der standortabhängigen Wetterdaten zur Bestimmung des Wasserbedarfs und zur entsprechenden Bewässerung der Fläche, kann eine automatisierte Bewässerung der Fläche realisiert werden. Der Einsatz des Verdunstungsmodells ermöglicht es, das Wasser in einer für die entsprechenden Pflanzen Menge beziehungsweise zur optimalen Zeit auszubringen, sodass insbesondere eine Überversorgung und eine Unterversorgung mit Wasser vermieden werden.

Der Bedarf an manuellen Schritten zur Bewässerung wird dadurch signifikant reduziert. Ist die Vorrichtung zur Wasserausbringung einmal entsprechend installiert, so kann die Bewässerung beispielsweise vollständig automatisiert erfolgen, ohne dass weitere manuelle Interaktionen notwendig sind. In anderen Ausgestaltungsformen der Vorrichtung zur Wasserausbringung kann es gegebenenfalls erforderlich sein, eine Wasserverteilungsvorrichtung der Vorrichtung zur Wasserausbringung, insbesondere einen Rasensprenger oder dergleichen, hinsichtlich seiner Position anzupassen, um die vollständige Fläche bewässern zu können. Dies entscheidet sich jedoch nach der konkreten Ausgestaltung der Wasserverteilungsvorrichtung. Diese kann auch geeignet sein, die komplette Fläche ohne Positionsänderung zu bewässern.

Durch die Berücksichtigung der Wetterdaten mittels des Verdunstungsmodells wird ein wesentlicher Einflussfaktor auf die Verdunstung beziehungsweise den Wasserbedarf berücksichtigt. Das Verdunstungsmodell kann jedoch auch weitere Eingangsgrößen berücksichtigen, um die Vorhersage für den Wasserbedarf genauer und zuverlässiger zu machen.

Ein weiterer Vorteil des Verfahrens nach dem verbesserten Konzept ist, dass es nicht erforderlich ist, mittels Sensoren standortabhängige Parameter zu messen, wie beispielsweise eine Feuchtigkeit im Erdboden, eine Temperatur an dem Standort und so weiter. Dadurch wird die Komplexität des Verfahrens und des eingesetzten Bewässerungssystems reduziert, es werden Kosten eingespart und es wird ein Wartungsaufwand für das Bewässerungssystem reduziert.

Durch Berücksichtigung der manuell auf die Fläche ausgebrachten Wassermenge zum Erzeugen beziehungsweise Anpassen des Verdunstungsmodells können systembedingte Ungenauigkeiten kompensiert werden, sodass der ermittelte Wasserbedarf mit höherer Genauigkeit ermittelt werden kann und die Bewässerung dadurch noch genauer und zielgerichteter erfolgen kann.

Zum einen kann die Wasserverdunstung, die mittels des Verdunstungsmodells beziehungsweise des initialen Verdunstungsmodells abhängig von den Wetterdaten bestimmt wird, auch von weiteren Bedingungen, nämlich beispielsweise der Bodenbeschaffenheit der Fläche, dem Bewuchs der Fläche oder der Art der auf der Fläche vorhandenen Pflanzen abhängen. Die Verdunstung kann auch von einer Beschattung der Fläche durch Objekte wie beispielsweise Häuser oder dergleichen abhängen.

Zudem können die Wetterdaten nur mit einer endlichen Genauigkeit beziehungsweise einer endlichen Ortsauflösung erfasst werden, sodass örtlich sehr lokal ausgeprägte Wetterphänomene oder Wetterbedingungen gegebenenfalls nicht oder nicht vollständig berücksichtigt werden können. Durch den Abgleich des theoretischen Wasserbedarfs mit der manuell ausgebrachten Wassermenge können diese Ungenauigkeiten teilweise oder vollständig kompensiert werden.

Zudem ist der tatsächliche Wasserbedarf gegebenenfalls auch abhängig von dem anfänglichen Feuchtigkeitsgehalt im Erdreich der Fläche, der durch die Wetterdaten nicht oder nur bedingt angegeben werden kann. Auch diese Unsicherheit kann durch den Abgleich mit der manuell ausgebrachten Wassermenge kompensiert werden.

Andererseits kann durch den Abgleich mit der manuell ausgebrachten Wassermenge auch dann, wenn nur eine eingeschränkte Menge an Wetterdaten für den Standort zur Verfügung steht, eine hinreichend genaue Vorhersage des Wasserbedarfs erreicht werden.

Die manuelle Bewässerungsphase kann also als Anlernphase oder Kalibrierungsphase für die nachfolgende automatische Bewässerungsphase angesehen werden. Auch kann die beschriebene Kalibrierung anhand des Abgleichs der manuell ausgebrachten Wassermenge mit dem theoretischen Wasserbedarf während späterer Kalibrierungszeiträumen wiederholt werden, um sich über die Zeit verändernden Parametern, wie beispielsweise dem Bewuchs, der Grundfeuchtigkeit im Erdreich oder auch dem zu bewässernden Flächeninhalt, Rechnung zu tragen.

Während der manuellen Bewässerungsphase kann der Benutzer beispielsweise auf Erfahrungswerte oder Datenbanken oder die konkrete Situation beziehungsweise den konkreten Zustand der Pflanzen auf der Fläche zurückgreifen, um die manuell ausgebrachte Wassermenge derart zu steuern, dass diese einer möglichst idealen Bewässerung für die Fläche entspricht.

Gemäß zumindest einer Ausführungsform des Bewässerungsverfahrens wird zum automatischen Bewässern der Fläche eine Wasserpumpe automatisch aktiviert, insbesondere mittels des Rechensystems beziehungsweise angesteuert durch das Rechensystem, um Wasser entsprechend dem ermittelten Wasserbedarf auf der Fläche auszubringen.

Insbesondere wird die Wasserpumpe für einen oder mehrere Bewässerungszeiträume aktiviert, bis die Wassermenge entsprechend dem ermittelten Wasserbedarf ausgebracht wurde. Danach wird die Wasserpumpe automatisch, insbesondere angesteuert durch das Rechensystem, deaktiviert.

Die Wasserpumpe befördert dabei das Wasser insbesondere von einem Wasserreservoir, einer Wasserleitung oder einer Wasserversorgungsschnittstelle an die Wasserverteilungsvorrichtung, welche das Wasser dann auf der Fläche verteilt.

Es kann beispielsweise automatisch eine periodische oder wiederholte Auswertung des ermittelten Wasserbedarfs erfolgen, insbesondere mittels des Rechensystems, um festzustellen, ob die Wassermenge entsprechend dem ermittelten Wasserbedarf größer ist als ein vorgegebener Grenzwert. Die Bewässerung durch Aktivieren der Wasserpumpe kann dann beispielsweise nur eingeleitet werden, wenn die Wassermenge größer ist als der Grenzwert. Dadurch kann ein unnötiges Aktivieren und Deaktivieren der Wasserpumpe verhindert werden. Zudem können dadurch auch Unsicherheiten in dem Verdunstungsmodell kompensiert werden.

Zusätzlich oder alternativ zum Aktivieren und Deaktivieren der Wasserpumpe kann auch die Pumpleistung der Wasserpumpe abhängig von dem ermittelten Wasserbedarf angepasst werden, sodass je nach ermitteltem Wasserbedarf eine höhere Wassermenge oder eine geringere Wassermenge pro Zeiteinheit auf die Fläche ausgebracht wird.

Je nach Ausgestaltungsform der Wasserverteilungsvorrichtung kann ein kontinuierliches Ausbringen des Wassers mit angepasster Pumpleistung der Wasserpumpe vorteilhaft sein oder ein vollständiges Aktivieren und Deaktivieren der Wasserpumpe.

Gemäß zumindest einer Ausführungsform wird die automatische Aktivierung oder die Anpassung der Pumpleistung der Wasserpumpe mittels des Rechensystems über eine wenigstens teilweise drahtlose Kommunikationsverbindung zwischen dem Rechensystem und der Wasserpumpe durchgeführt.

Dass die Kommunikationsverbindung wenigstens teilweise drahtlos ausgestaltet ist, kann insbesondere derart verstanden werden, dass das Rechensystem über eine Kommunikationsschnittstelle zur drahtlosen Kommunikation verfügt und die Vorrichtung zur Wasserausbringung ebenfalls eine Kommunikationsschnittstelle zur drahtlosen Kommunikation aufweist. Dabei kann die Wasserpumpe selbst die Kommunikationsschnittstelle aufweisen, sodass eine vollständig drahtlose Kommunikationsverbindung zwischen dem Rechensystem und der Wasserpumpe realisiert ist, oder eine sonstige Komponente der Vorrichtung zur Wasserversorgung kann die Kommunikationsschnittstelle aufweisen. Die Kommunikation zwischen der Kommunikationsschnittstelle der Vorrichtung zur Wasserversorgung und der Wasserpumpe kann dann ebenfalls drahtlos oder drahtgebunden erfolgen.

Die Kommunikationsverbindung beziehungsweise der drahtlose Anteil der Kommunikationsverbindung kann beispielsweise gemäß einem GSM-Standard, einem auf dem GSM-Standard basierenden Standard, Edge, UMTS, HSDPA, LTE oder einem sonstigen Mobilfunkstandard realisiert sein. Die Kommunikation kann auch beispielsweise basierend auf LTE-M oder LTECAT-M1 oder dergleichen erfolgen. Die Kommunikation kann auch gemäß einem Schmalband-Internet-der-Dinge-Standard, NB-IoT (englisch: "narrow band internet of things") oder einem anders ausgestalteten Niedrigenergieweitverkehr-netzwerk, LPWAN (englisch: "low power wide area network") erfolgen.

Durch die wenigstens teilweise drahtlose Kommunikationsverbindung kann eine erhöhte Flexibilität bei der Positionierung der Wasserpumpe realisiert werden.

Gemäß zumindest einer Ausführungsform wird die manuell ausgebrauchte Wassermenge basierend auf einer entsprechenden Benutzereingabe durch das Rechensystem, beispielsweise über die Benutzerschnittstelle bestimmt. In anderen Ausführungsformen oder zusätzlich kann die manuell ausgebrauchte Wassermenge automatisch mittels der Wasserpumpe, insbesondere mittels eines Durchflussmengensensors der Wasserpumpe, oder mittels eines Durchflussmengensensors der Vorrichtung zur Wasserausbringung erfasst werden und, beispielsweise drahtlos, an das Rechensystem übermittelt werden.

Erfindungsgemäß werden während der manuellen Bewässerungsphase weitere Wetterdaten für den Standort erfasst und gespeichert. Der theoretische Wasserbedarf wird mittels des Rechensystems unter Verwendung eines vorgegebenen initialen Verdunstungsmodells abhängig von den weiteren Wetterdaten, insbesondere als Eingabe, bestimmt. Das initiale Verdunstungsmodell wird abhängig von einer Abweichung des theoretischen Wasserbedarfs von der manuell ausgebrachten Wassermenge automatisch angepasst, insbesondere mittels des Rechensystems, um das Verdunstungsmodell zu erzeugen.

Bezüglich der Bestimmung des theoretischen Wasserbedarfs anhand des vorgegebenen initialen Verdunstungsmodells und bezüglich der Erfassung der weiteren Wetterdaten wird auf die obigen Ausführungen zum Bestimmen des Wasserbedarfs basierend auf dem Verdunstungsmodell und zum Erfassen der Wetterdaten verwiesen.

Insbesondere können die weiteren Wetterdaten statistisch vorverarbeitet oder ausgewertet werden und der theoretische Wasserbedarf kann basierend auf den statistisch vorverarbeiteten oder ausgewerteten weiteren Wetterdaten bestimmt werden. Beispielsweise kann eine mittlere Verdunstungsrate basierend auf den weiteren Wetterdaten bestimmt werden und der theoretische Wasserbedarf kann basierend auf der mittleren Verdunstungsrate bestimmt werden. Dadurch der theoretische Wasserbedarf robuster bestimmt werden und die Bewässerung kann weiter optimiert werden.

Zum Anpassen des initialen Verdunstungsmodells können beispielsweise Parameter des initialen Verdunstungsmodells verändert werden. Alternativ oder zusätzlich können dem initialen Verdunstungsmodell auch einer oder mehrere Rechenschritte vor- oder nachgeschaltet werden, um das Verdunstungsmodell zu erhalten. In einem einfachen Fall kann beispielsweise die Ausgabe des initialen Verdunstungsmodells mit einem Faktor multipliziert werden, der von der Abweichung des theoretischen Wasserbedarfs von der manuell ausgebrachten Wassermenge abhängt, um eine entsprechend korrigierte Ausgabe des Verdunstungsmodells zu erhalten.

Solche Ausführungsformen erlauben eine flexible und dynamische Anpassung des aktuellen Verdunstungsmodells je nach Veränderung der äußeren Bedingungen oder auch des Nutzerverhaltens.

Gemäß zumindest einer Ausführungsform werden, insbesondere während der automatischen Bewässerungsphase, automatisch Wettervorhersagedaten für den Standort erfasst und insbesondere gespeichert. Die automatische Bewässerung der Fläche entsprechend dem bestimmten Wasserbedarf abhängig wird von den Wettervorhersagedaten durchgeführt.

Die Wettervorhersagedaten können dabei Informationen enthalten, wie diese auch in den Wetterdaten enthalten sind. Die Wettervorhersagedaten betreffen dabei einen vordefinierten zukünftigen Zeitraum. Durch die Berücksichtigung der Wettervorhersagedaten kann beispielsweise eine automatische Ausbringung von Wasser vermieden oder reduziert werden, wenn innerhalb des vordefinierten zukünftigen Zeitraums Niederschlag in einer entsprechenden Menge zu erwarten ist. Dadurch können Energie und Wasser eingespart sowie eine Überversorgung mit Wasser verhindert werden.

Gemäß zumindest einer Ausführungsform wird mittels der Benutzerschnittstelle eine Benutzereingabe betreffend den Standort der Fläche und/oder einen Standort der Vorrichtung zur Wasserausbringung, insbesondere der Wasserpumpe und/oder der Wasserverteilungsvorrichtung, erfasst, um den Standort der Fläche zu bestimmen.

Wenn die Benutzerschnittstelle als Teil eines mobilen elektronischen Endgeräts, beispielsweise eines Smartphones, ausgestaltet ist, so kann sich der Benutzer beispielsweise zu dem Standort der Fläche begeben und durch eine automatische oder manuelle Positionsbestimmung Koordinaten des Standorts der Fläche erfassen.

Gemäß zumindest einer Ausführungsform werden mittels einer Empfängereinheit für ein globales Navigationssatellitensystem, GNSS, Standortdaten betreffend den Standort zur Wasserausbringung, der Wasserpumpe und/oder der Wasserverteilungsvorrichtung, erfasst, um den Standort der Fläche zu bestimmen.

Die Benutzerschnittstelle beziehungsweise die Empfängereinheit für das GNSS kann dabei insbesondere mit dem Rechensystem zur Übertragung der Standortdaten beziehungsweise der Benutzereingabe gekoppelt sein.

Durch die Erfassung der Standortdaten mittels der Empfängereinheit kann das Verfahren weiter automatisiert werden, sodass ein Komfortgrad für den Benutzer erhöht wird.

Gemäß zumindest einer Ausführungsform werden mittels eines Funkempfängers, beispielsweise des Rechensystems, der Benutzerschnittstelle, des mobilen elektronischen Endgeräts oder der Wasserpumpe, Zellstandortdaten einer Funknetzzelle eines Funknetzes erfasst, um den Standort der Fläche zu bestimmen.

Gemäß dem verbesserten Konzept wird auch ein Bewässerungssystem zur automatischen Bewässerung einer Fläche angegeben. Das Bewässerungssystem weist ein Rechensystem und eine Vorrichtung zur Wasserausbringung auf. Das Rechensystem ist dazu eingerichtet, einen Standort der Fläche zu bestimmen, automatisch Wetterdaten für den Standort zu erfassen und insbesondere zu speichern und unter Verwendung eines vorgegebenen Verdunstungsmodells abhängig von den Wetterdaten einen Wasserbedarf für die Fläche zu bestimmen. Die Vorrichtung zur Wasserausbringung ist dazu eingerichtet, angesteuert durch das Rechensystem die Fläche entsprechend dem bestimmten Wasserbedarf automatisch zu bewässern.

Insbesondere kann das Rechensystem eines oder mehrere Steuersignale basierend auf dem bestimmten Wasserbedarf erzeugen und an die Vorrichtung zur Wasserausbringung übermitteln und die Vorrichtung zur Wasserausbringung kann basierend auf dem einen oder mehreren Steuersignalen Wasser auf die Fläche ausbringen, um diese entsprechend dem bestimmten Wasserbedarf zu bewässern.

Insbesondere weist die Vorrichtung zur Wasserausbringung dann eine Kommunikationsschnittstelle zur Kommunikation mit dem Rechensystem auf. Das Rechensystem weist ebenfalls eine Kommunikationsschnittstelle zur Kommunikation mit der Vorrichtung zur Wasserausbringung auf.

Das Rechensystem kann beispielsweise eine weitere Kommunikationsschnittstelle aufweisen, um beispielsweise die Wetterdaten von einem externen Servercomputersystem, beispielsweise über eine Internetverbindung, zu erfassen.

Gemäß zumindest einer Ausführungsform des Bewässerungssystems weist die Vorrichtung zur Wasserausbringung eine automatisch steuerbare, insbesondere fernsteuerbare, Wasserpumpe auf, um die Fläche entsprechend dem ermittelten Wasserbedarf automatisch zu bewässern.

Gemäß zumindest einer Ausführungsform ist das Rechensystem dazu eingerichtet, abhängig von dem ermittelten Wasserbedarf wenigstens ein Steuersignal an die Vorrichtung zur Wasserausbringung zu übermitteln und die Vorrichtung zur Wasserausbringung ist dazu eingerichtet, abhängig von dem wenigstens einen Steuersignal die Wasserpumpe zu aktivieren, um Wasser entsprechend dem ermittelten Wasserbedarf auf der Fläche auszubringen.

Gemäß zumindest einer Ausführungsform weist die Wasserpumpe eine Kommunikationsschnittstelle zur drahtlosen Kommunikation mit dem Rechensystem auf, die dazu eingerichtet ist, das wenigstens eine Steuersignal von dem Rechensystem zu erhalten.

Gemäß zumindest einer Ausführungsform weist die Vorrichtung zur Wasserausbringung eine mit der Wasserpumpe verbundene oder verbindbare Wasserverteilungsvorrichtung auf, um das Wasser, insbesondere entsprechend dem ermittelten Wasserbedarf, auf der Fläche auszubringen.

Insbesondere kann die Wasserpumpe mit der Wasserverteilungsvorrichtung derart verbunden werden, dass Wasser, welches insbesondere durch die Pumpe von einem Wasserreservoir erhalten werden kann, über die Verbindung an die Wasserverteilungsvorrichtung transportieren kann.

Gemäß zumindest einer Ausführungsform enthält die Wasserverteilungsvorrichtung einen oder mehrere Tropfschläuche, einen oder mehrere Rasensprenger, eine oder mehrere Sprinkleranlagen und/oder eine oder mehrere Beregnungsanlagen oder eine sonstige für die Bewässerung der Fläche geeignete Vorrichtung.

Gemäß zumindest einer Ausführungsform weist das Rechensystem eine Benutzerschnittstelle zum Erfassen einer Benutzereingabe betreffend den Standort der Fläche auf.

Gemäß zumindest einer Ausführungsform weist die Vorrichtung zur Wasserausbringung eine Empfängereinheit für ein GNSS auf, die dazu eingerichtet ist, Standortdaten der Vorrichtung zur Wasserausbringung, insbesondere der Wasserpumpe, zu erfassen, um den Standort der Fläche zu bestimmen.

Weitere Ausführungsformen des Bewässerungssystems nach dem verbesserten Konzept folgen direkt aus den verschiedenen Ausgestaltungsformen des Bewässerungsverfahrens nach dem verbesserten Konzept und umgekehrt.

Insbesondere kann das Bewässerungssystem dazu eingerichtet sein, ein Bewässerungsverfahren nach dem verbesserten Konzept durchzuführen oder es führt ein solches Verfahren durch.

Gemäß dem verbesserten Konzept wird auch ein Computerprogrammprodukt angegeben, das wenigstens ein Computerprogramm enthält oder aus dem wenigstens einen Computerprogramm besteht. Das wenigstens eine Computerprogramm weist Befehle auf, die bei Ausführung durch das Rechensystem eines Bewässerungssystems nach dem verbesserten Konzept das Bewässerungssystem dazu veranlassen, ein Bewässerungsverfahren nach dem verbesserten Konzept durchzuführen.

Gemäß zumindest einer Ausführungsform enthält das wenigstens eine Computerprogramm zwei oder mehr Computerprogramme, die beispielsweise jeweils auf unterschiedlichen Recheneinheiten des Rechensystems ausgeführt werden.

Gemäß dem verbesserten Konzept wird auch ein computerlesbares Speichermedium angegeben, auf dem ein Computerprogrammprodukt nach dem verbesserten Konzept gespeichert ist, auf dem also das wenigstens eine Computerprogramm gespeichert ist.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind auch Ausführungen und Merkmalskombinationen als offenbart anzusehen, die nicht alle Merkmale eines ursprünglich formulierten unabhängigen Anspruchs aufweisen und/oder die über die in den Rückbezügen der Ansprüche dargelegten Merkmalskombinationen hinausgehen oder von denen abweichen.

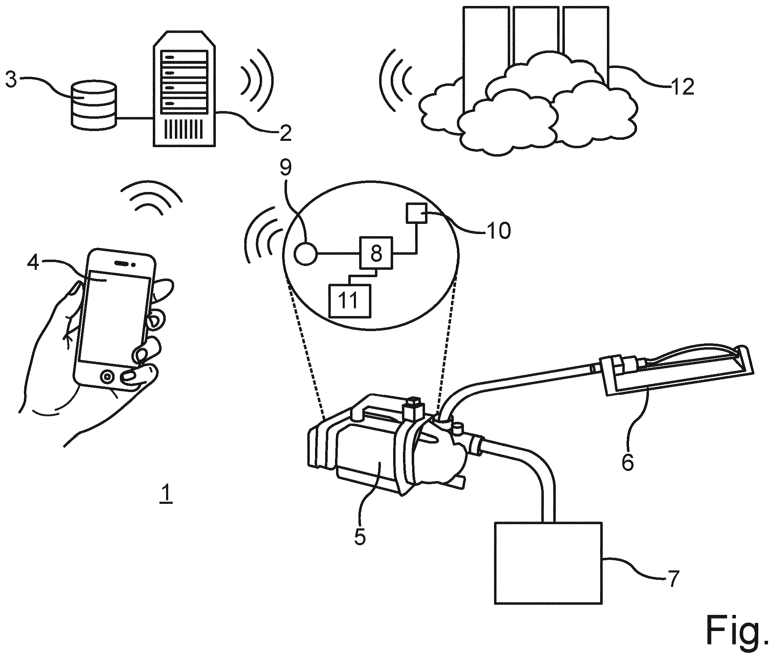

Im Folgenden werden Ausführungsbeispiele des verbesserten Konzepts anhand der Zeichnungen beschrieben. In der einzigen Figur Fig. ist dazu schematisch eine beispielhafte Ausführungsform eines Bewässerungssystems nach dem verbesserten Konzept dargestellt.

Die in der Fig. dargestellte beispielhafte Ausführungsform des Bewässerungssystems 1 weist eine Vorrichtung zur Wasserausbringung 5, 6 auf, insbesondere eine Wasserpumpe 5. Das Bewässerungssystem 1 weist außerdem ein Rechensystem 2, 3, 4 auf.

Das Rechensystem 2, 3, 4 kann beispielsweise eine Serverrecheneinheit 2 enthalten, die beispielsweise eine Speichereinheit 3 aufweisen kann. Das Rechensystem 2, 3, 4 kann auch ein Endgerät 4, insbesondere ein mobiles Endgerät, beispielsweise ein Mobiltelefon oder Smartphone, aufweisen oder eine Softwareapplikation zur Ausführung auf dem Endgerät 4.

Das Endgerät 4 kann auch als Benutzerschnittstelle für einen Benutzer des Bewässerungssystems 1 dienen, mittels welcher ein Benutzer Daten mit der Serverrecheneinheit 2 und/oder eine Vorrichtung zur Wasserausbringung 5, 6 des Bewässerungssystems 1 austauschen kann. In alternativen Ausführungsformen weist das Rechensystem 2, 3, 4 nur eine Recheneinheit auf, welche die Aufgaben der Serverrecheneinheit 2 und des Endgeräts 4 übernimmt.

Die Wasserpumpe 5 enthält einen Motor 11 und eine Steuereinheit 8, die zum Steuern des Motors 11 mit diesem verbunden ist. Die Wasserpumpe 5 weist außerdem eine Kommunikationsschnittstelle 9 auf, mittels der die Wasserpumpe 5 drahtlos mit der Serverrecheneinheit 2 kommunizieren kann.

Optional kann die Wasserpumpe 5 auch einen GNSS-Empfänger 10, beispielsweise einen GPS-Empfänger, zum Bestimmen von Standortdaten der Wasserpumpe 5 aufweisen. Des Weiteren kann die Vorrichtung zur Wasserausbringung 5, 6 eine Wasserverteilungsvorrichtung 6, insbesondere einen Rasensprenger oder dergleichen, aufweisen, um mittels der Wasserpumpe 5 beispielsweise von einem Reservoir 7 bereitgestelltes Wasser auf einer zu bewässernden Fläche auszubringen.

Im Betrieb des Bewässerungssystems 1 wird ein Standort der zu bewässernden Fläche bestimmt. Dies kann beispielsweise durch eine Nutzereingabe in das Endgerät 4 erfolgen, welches die entsprechenden Informationen an die Serverrecheneinheit 2 übertragen kann. Alternativ oder zusätzlich kann der Standort der Wasserpumpe 5 mittels des GNSS-Empfängers 10 bestimmt werden, indem Standortdaten über das GNSS ermittelt werden und über die Kommunikationsschnittstelle 9 der Wasserpumpe 5 direkt an die Serverrecheneinheit 2 oder indirekt über das Endgerät 4 an die Serverrecheneinheit 2 übertragen wird.

Das Bewässerungssystem 1, insbesondere die Wasserpumpe 5, kann in einem automatischen Bewässerungsmodus betrieben werden. Beispielsweise kann die Wasserpumpe 5 mittels des Endgeräts 4 in den automatischen Bewässerungsmodus gebracht werden. Im automatischen Bewässerungsmodus werden mittels der Serverrecheneinheit 2 automatisch Wetterdaten für den Standort der Fläche erfasst, beispielsweise über weitere Servereinrichtungen 12, beispielsweise eine Internetverbindung. Die Wetterdaten können beispielsweise Informationen über die aktuelle Regenmenge, Windgeschwindigkeit, Windrichtung, Temperatur und gegebenenfalls auch andere Parameter betreffend die Wettersituation an dem Standort der Wasserpumpe 5 beinhalten.

Mittels der Serverrecheneinheit 2 werden die Wetterdaten beispielsweise in ein Verdunstungsmodell eingespeist, das auf der Speichereinheit 3 gespeichert ist. Das Verdunstungsmodell kann abhängig von den Wetterdaten den Verdunstungsgrad pro Flächeneinheit an dem Standort der Wasserpumpe 5 und damit den aktuellen Wasserbedarf für die Fläche abschätzen. Die Serverrecheneinheit 2 oder das Endgerät 4 können dann entsprechende Steuerbefehle an die Wasserpumpe 5 übermitteln, um diese automatisch zu aktivieren beziehungsweise eine Pumpleistung des Motors 11 anzupassen, um so über das Reservoir 7 und die Wasserverteilungsvorrichtung 6 Wasser entsprechend dem von dem Verdunstungsmodell bestimmten Wasserbedarf auf der Fläche auszubringen.

Optional kann die Serverrecheneinheit 2 auch Wettervorhersagedaten für den Standort der zu bewässernden Fläche von der Servereinrichtung 12 abrufen und diese bei der Bestimmung des Wasserbedarfs beziehungsweise bei der Erzeugung der Steuersignale für die Wasserpumpe 5 berücksichtigen. Somit kann ein unnötiger Wasserverbrauch vermieden werden, wenn in absehbarer Zeit der Wasserbedarf durch natürlichen Niederschlag gedeckt werden kann.

Erfindungsgemäß wird das Bewässerungssystem 1, insbesondere das Verdunstungsmodell, vor dem automatischen Betriebsmodus kalibriert oder angelernt. Dazu benutzt der Benutzer die Vorrichtung zur Wasserausbringung 5, 6 über einen vordefinierten Zeitraum von beispielsweise mehreren Tagen in einem manuellen Bewässerungsmodus. Während dieses Zeitraums führt der Nutzer die Bewässerung der Fläche manuell durch oder steuert diese manuell, wobei darauf zu achten ist, dass die manuell ausgebrachte Wassermenge möglichst ideal für die Fläche und den Bewuchs der Fläche ist. Während der Kalibrierung erfasst die Serverrecheneinheit 2 ebenfalls bereits Wetterdaten und bestimmt wie oben beschrieben mittels des Verdunstungsmodells in einem unkalibrierten oder nur teilweise kalibrierten Zustand des Verdunstungsmodells den theoretischen Verdunstungsgrad pro Flächeneinheit und damit den theoretischen Wasserbedarf für die Fläche. Der theoretische Wasserbedarf kann dann mittels der Serverrecheneinheit 2 mit der durch den Nutzer manuell ausgebrachten Wassermenge verglichen werden. Dazu kann der Nutzer die Nutzungsdauer der Wasserpumpe 5 beziehungsweise die manuell ausgebrachte Wassermenge manuell, beispielsweise über das Endgerät 4, eingeben oder die Wasserpumpe 5 kann über einen Durchflussmengensensor die manuell ausgebrachte Wassermenge bestimmen und wie oben beschrieben an die Serverrecheneinheit 2 übermitteln.

Abhängig von einer Abweichung der Wassermenge entsprechend dem theoretischen Wasserbedarf von der manuell ausgebrachten Wassermenge kann die Serverrecheneinheit 2 dann das Verdunstungsmodell anpassen, um im automatischen Bewässerungsmodus genauere Vorhersagen liefern zu können.

Die Abweichung des theoretischen Wasserbedarfs von der manuell ausgebrachten Wassermenge spiegelt insbesondere den ungefähren Flächeninhalt der zu bewässernden Fläche sowie die Bodenbeschaffenheit wieder. Außerdem können dadurch nicht vorhersagbare Umstände wie der Bewuchs der Fläche mit Pflanzen oder lokale Wetterphänomene oder auch der ursprüngliche Feuchtigkeitsgehalt im Erdreich der Fläche berücksichtigt werden.

In verschiedenen Ausgestaltungsformen kann der Nutzer beispielsweise über das Endgerät 4 die Wasserpumpe 5 auch unabhängig von der Kalibrierung in den manuellen Bewässerungsmodus versetzen. In dem manuellen Bewässerungsmodus kann die Wasserpumpe 5 durch den Nutzer direkt gesteuert werden. Dies kann beispielsweise über eine Software auf dem Endgerät 4 erfolgen. Im einfachsten Fall kann der Nutzer so Start- und Stoppbefehle zum Aktiveren beziehungsweise Deaktivieren der Wasserpumpe 5 übermitteln.

In manchen Ausführungsformen kann der Nutzer die Wasserpumpe 5 insbesondere über das Endgerät 4 auch in einen zeitgesteuerten Bewässerungsmodus versetzen. Ist dieser aktiviert, so kann der Nutzer beispielsweise über das Endgerät 4 Zeiträume, etwa Wochentage und/oder Uhrzeiten, einstellen, zu denen die Pumpe aktiviert werden soll. Dadurch kann eine teilautomatisierte Bewässerung realisiert werden.

Wie beschrieben wird es durch das verbesserte Konzept ermöglicht, die Bewässerung einer Fläche hochgradig zu automatisieren und damit den Benutzerkomfort deutlich zu steigern. Durch das verbesserte Konzept und die Nutzung des Verdunstungsmodells in der beschriebenen Weise wird dabei eine optimale Bewässerung der Fläche möglich, sodass sowohl Unterversorgung als auch Überversorgung mit Wasser vermieden werden kann.

Das Bewässerungssystem nach dem verbesserten Konzept kommt dabei mit Vorteil ohne eine Sensorik zur Bestimmung der lokalen Gegebenheiten am Standort der Fläche aus, beispielsweise zur Feuchtemessung im Erdboden oder zur Temperaturmessung. Stattdessen werden online Wetterdaten sowie gegebenenfalls die Erkenntnisse aus der Anlernphase genutzt, um den Bewässerungsbedarf möglichst genau zu ermitteln.

In der Anlernphase wird in den entsprechenden Ausführungsformen ausgenutzt, dass die Abweichung zwischen manuell ausgebrachter Wassermenge und theoretisch ermittelter Wassermenge sowohl den Flächeninhalt der zu bewässernden Fläche als auch die Bodenbeschaffenheit näherungsweise als gemeinsamen Faktor wiederspiegelt. Das Bewässerungssystem ermittelt also nicht notwendigerweise den genauen Flächeninhalt beziehungsweise eine Maßzahl für die genaue Bodenbeschaffenheit separat voneinander, sondern nutzt die Information, wie hoch der Verdunstungsgrad anscheinend ist, wie viel Wasser pro Flächeneinheit verdunstet sein müsste und wie lange entsprechende die Wasserpumpe laufen muss, um diese Verdunstung zu kompensieren. Ist eine hinreichende Menge an gelernten Daten vorhanden, so kann der Anlernzyklus abgeschlossen werden und das Bewässerungssystem in dem automatischen Bewässerungsmodus betrieben werden.

### BEZUGSZEICHENLISTE:

- 1: Bewässerungssystem
- 2: Serverrecheneinheit
- 3: Speichereinheit
- 4: Endgerät
- 5: Wasserpumpe
- 6: Wasserverteilungsvorrichtung
- 7: Reservoir
- 8: Steuereinheit
- 9: Kommunikationsschnittstelle
- 10: Empfänger
- 11: Motor
- 12: Servereinrichtung

## Patentansprüche

1. Bewässerungsverfahren zur automatischen Bewässerung einer Fläche, wobei
- ein Standort der Fläche bestimmt wird;
- automatisch Wetterdaten für den Standort erfasst werden;
- mittels eines Rechensystems (2, 3, 4) unter Verwendung eines vorgegebenen Verdunstungsmodells abhängig von den Wetterdaten ein Wasserbedarf für die Fläche bestimmt wird;
- die Fläche entsprechend dem bestimmten Wasserbedarf automatisch bewässert wird;
- die automatische Erfassung der Wetterdaten, die Bestimmung des Wasserbedarfs und die automatische Bewässerung der Fläche während einer automatischen Bewässerungsphase erfolgen; **dadurch gekennzeichnet, dass**
- während einer manuellen Bewässerungsphase vor der automatischen Bewässerungsphase mittels des Rechensystems (2, 3, 4)
- automatisch ein theoretischer Wasserbedarf für die Fläche bestimmt wird;
- eine manuell auf der Fläche ausgebrachte Wassermenge bestimmt wird; und
- das Verdunstungsmodell basierend auf dem theoretischen Wasserbedarf und der manuell ausgebrachten Wassermenge erzeugt oder angepasst wird, wobei
- während der manuellen Bewässerungsphase weitere Wetterdaten für den Standort erfasst werden;
- der theoretische Wasserbedarf mittels des Rechensystems (2, 3, 4) unter Verwendung eines vorgegebenen initialen Verdunstungsmodells abhängig von den weiteren Wetterdaten bestimmt wird; und
- das initiale Verdunstungsmodell abhängig von einer Abweichung des theoretischen Wasserbedarfs von der manuell ausgebrachten Wassermenge angepasst wird, um das Verdunstungsmodell zu erhalten.

2. Bewässerungsverfahren nach Anspruch 1, wobei zum automatischen Bewässern der Fläche eine Wasserpumpe (5) automatisch aktiviert wird und/oder eine Pumpleistung der Wasserpumpe (5) angepasst wird, um Wasser entsprechend dem bestimmten Wasserbedarf auf der Fläche auszubringen.

3. Bewässerungsverfahren nach Anspruch 2, wobei die automatische Aktivierung und/oder Anpassung der Pumpleistung der Wasserpumpe (5) mittels des Rechensystems (2, 3, 4) über eine wenigstens teilweise drahtlose Kommunikationsverbindung zwischen dem Rechensystem (2, 3, 4) und der Wasserpumpe (5) durchgeführt wird.

4. Bewässerungsverfahren nach einem der vorhergehenden Ansprüche, wobei
- automatisch Wettervorhersagedaten für den Standort erfasst werden; und
- die automatische Bewässerung der Fläche entsprechend dem bestimmten Wasserbedarf abhängig von den Wettervorhersagedaten durchgeführt wird.

5. Bewässerungsverfahren nach einem der vorhergehenden Ansprüche, wobei
- mittels einer Benutzerschnittstelle (4) eine Benutzereingabe betreffend den Standort der Fläche erfasst wird; und/oder
- mittels einer Empfängereinheit (10) für ein globales Navigationssatellitensystem Standortdaten erfasst werden, um den Standort der Fläche zu bestimmen; und/oder
- mittels eines Funkempfängers Zellstandortdaten einer Funknetzzelle erfasst werden, um den Standort der Fläche zu bestimmen.

6. Bewässerungssystem (1) zur automatischen Bewässerung einer Fläche, wobei
- das Bewässerungssystem (1) ein Rechensystem (2, 3, 4) aufweist, das dazu eingerichtet ist,
- einen Standort der Fläche zu bestimmen;
- während einer automatischen Bewässerungsphase automatisch Wetterdaten für den Standort zu erfassen; und
- während der automatischen Bewässerungsphase unter Verwendung eines vorgegebenen Verdunstungsmodells abhängig von den Wetterdaten einen Wasserbedarf für die Fläche zu bestimmen;
- das Bewässerungssystem (1) eine Vorrichtung zur Wasserausbringung (5, 6) aufweist, die dazu eingerichtet ist, angesteuert durch das Rechensystem (2, 3, 4), während der automatischen Bewässerungsphase die Fläche entsprechend dem bestimmten Wasserbedarf automatisch zu bewässern; **dadurch gekennzeichnet, dass**
- das Rechensystem (2, 3, 4) dazu eingerichtet ist, während einer manuellen Bewässerungsphase vor der automatischen Bewässerungsphase
- automatisch einen theoretischen Wasserbedarf für die Fläche zu bestimmen;
- eine manuell auf der Fläche ausgebrachte Wassermenge zu bestimmen; und
- das Verdunstungsmodell basierend auf dem theoretischen Wasserbedarf und der manuell ausgebrachten Wassermenge zu erzeugen oder anzupassen, wobei
- während der manuellen Bewässerungsphase weitere Wetterdaten für den Standort erfasst werden;
- der theoretische Wasserbedarf mittels des Rechensystems (2, 3, 4) unter Verwendung eines vorgegebenen initialen Verdunstungsmodells abhängig von den weiteren Wetterdaten bestimmt wird; und
- das initiale Verdunstungsmodell abhängig von einer Abweichung des theoretischen Wasserbedarfs von der manuell ausgebrachten Wassermenge angepasst wird, um das Verdunstungsmodell zu erhalten.

7. Bewässerungssystem (1) nach Anspruch 6, wobei die Vorrichtung zur
Wasserausbringung (5, 6) eine automatisch steuerbare Wasserpumpe (5) aufweist, um die Fläche entsprechend dem ermittelten Wasserbedarf automatisch zu bewässern.

8. Bewässerungssystem (1) nach Anspruch 7, wobei
- das Rechensystem (2, 3, 4) dazu eingerichtet ist, abhängig von dem ermittelten Wasserbedarf wenigstens ein Steuersignal an die Vorrichtung zur Wasserausbringung (5, 6) zu übermitteln; und
- die Vorrichtung zur Wasserausbringung (5, 6) dazu eingerichtet ist, abhängig von dem wenigstens einen Steuersignal die Wasserpumpe (5) zu aktivieren, um Wasser entsprechend dem ermittelten Wasserbedarf auf der Fläche auszubringen.

9. Bewässerungssystem (1) nach Anspruch 8, wobei die Wasserpumpe (5) eine
Kommunikationsschnittstelle (9) zur drahtlosen Kommunikation mit dem Rechensystem (2, 3, 4) aufweist, die dazu eingerichtet ist, das wenigstens eine Steuersignal von dem Rechensystem (2, 3, 4) zu erhalten.

10. Bewässerungssystem (1) nach einem der Ansprüche 7 bis 9, wobei die
Vorrichtung zur Wasserausbringung (5, 6) eine mit der Wasserpumpe (5) verbindbare Wasserverteilungsvorrichtung (6) aufweist, um das Wasser auf der Fläche auszubringen.

11. Bewässerungssystem (1) nach einem der Ansprüche 6 bis 10, wobei
- das Rechensystem (2, 3, 4) eine Benutzerschnittstelle (4) zum Erfassen einer Benutzereingabe betreffend den Standort der Fläche aufweist, und/oder
- die Vorrichtung zur Wasserausbringung (5, 6) eine Empfängereinheit (10) für ein globales Navigationssatellitensystem aufweist, die dazu eingerichtet ist, Standortdaten der Vorrichtung zur Wasserausbringung (5, 6) zu erfassen, um den Standort der Fläche zu bestimmen.

12. Computerprogrammprodukt mit Befehlen, **dadurch gekennzeichnet, dass** die Befehlen bei Ausführung durch das Rechensystem (2, 3, 4) eines Bewässerungssystems (1) nach einem der Ansprüche 6 bis 11 das Bewässerungssystem (1) dazu veranlassen, ein Bewässerungsverfahren nach einem der Ansprüche 1 bis 5 durchzuführen.

## Claims

1. An irrigation method for automatic irrigation of a surface, wherein
- a location of the surface is determined;
- weather data for the location is automatically captured;
- a water demand for the surface is determined by means of a computing system (2, 3, 4) using a preset evaporation model depending on the weather data;
- the surface is automatically irrigated corresponding to the determined water demand;
- the automatic capture of the weather data, the determination of the water demand and the automatic irrigation of the surface are effected during an automatic irrigation phase;
**characterized in that**
- during a manual irrigation phase before the automatic irrigation phase, by means of the computing system (2, 3, 4),
- a theoretic water demand for the surface is automatically determined;
- an amount of water manually output on the surface is determined; and
- the evaporation model is generated or adapted based on the theoretic water demand and the manually output amount of water, wherein
- further weather data for the location is captured during the manual irrigation phase;
- the theoretic water demand is determined by means of the computing system (2, 3, 4) using a preset initial evaporation model depending on the further weather data; and
- the initial evaporation model is adapted depending on a deviation of the theoretic water demand from the manually output amount of water, to obtain the evaporation model.

2. The irrigation method according to claim 1, wherein a water pump (5) is automatically activated for automatically irrigating the surface and/or a pumping power of the water pump (5) is adapted to output water on the surface corresponding to the determined water demand.

3. The irrigation method according to claim 2, wherein the automatic activation and/or adaptation of the pumping power of the water pump (5) is performed by means of the computing system (2, 3, 4) via an at least partially wireless communication link between the computing system (2, 3, 4) and the water pump (5).

4. The irrigation method according to any one of the preceding claims, wherein
- weather forecast data for the location is automatically captured; and
- the automatic irrigation of the surface is performed corresponding to the determined water demand depending on the weather forecast data.

5. The irrigation method according to any one of the preceding claims, wherein
- a user input relating to the location of the surface is captured by means of a user interface (4); and/or
- location data is captured by means of a receiver unit (10) for a global navigation satellite system to determine the location of the surface; and/or
- cell location data of a radio network cell is captured by means of a radio receiver to determine the location of the surface.

6. An irrigation system (1) for automatic irrigation of a surface, wherein
- the irrigation system (1) comprises a computing system (2, 3, 4), which is configured
- to determine a location of the surface;
- to automatically capture weather data for the location during an automatic irrigation phase; and
- to determine a water demand for the surface during the automatic irrigation phase using a preset evaporation model depending on the weather data;
- the irrigation system (1) comprises a device for water output (5, 6), which is configured to automatically irrigate the surface corresponding to the determined water demand controlled by the computing system (2, 3, 4) during the automatic irrigation phase;
**characterized in that**
- the computing system (2, 3, 4) is configured, during a manual irrigation phase before the automatic irrigation phase,
- to automatically determine a theoretic water demand for the surface;
- to determine an amount of water manually output on the surface; and
- to generate or adapt the evaporation model based on the theoretic water demand and the manually output amount of water, wherein
- further weather data for the location is captured during the manual irrigation phase;
- the theoretic water demand is determined by means of the computing system (2, 3, 4) using a preset initial evaporation model depending on the further weather data; and
- the initial evaporation model is adapted depending on a deviation of the theoretic water demand from the manually output amount of water to obtain the evaporation model.

7. The irrigation system (1) according to claim 6, wherein the device for water output (5, 6) comprises an automatically controllable water pump (5), to automatically irrigate the surface corresponding to the ascertained water demand.

8. The irrigation system (1) according to claim 7, wherein
the computing system (2, 3, 4) is configured to transfer at least one control signal to the device for water output (5, 6) depending on the ascertained water demand; and
- the device for water output (5, 6) is configured to activate the water pump (5) depending on the at least one control signal, to output water on the surface corresponding to the ascertained water demand.

9. The irrigation system (1) according to claim 8, wherein the water pump (5) comprises a communication interface (9) for wireless communication with the computing system (2, 3, 4), which is configured to obtain the at least one control signal from the computing system (2, 3, 4).

10. The irrigation system (1) according to any one of claims 7 to 9, wherein the device for water output (5, 6) comprises a water distribution device (6) connectable to the water pump (5) to output the water on the surface.

11. The irrigation system (1) according to any one of claims 6 to 10, wherein
- the computing system (2, 3, 4) comprises a user interface (4) for capturing a user input relating to the location of the surface; and/or
- the device for water output (5, 6) comprises a receiver unit (10) for a global navigation satellite system, which is configured to capture location data of the device for water output (5, 6) to determine the location of the surface.

12. A computer program product with commands, **characterized in that** the commands, upon execution by the computing system (2, 3, 4) of an irrigation system (1) according to any one of claims 6 to 11, cause the irrigation system (1) to perform an irrigation method according to any one of claims 1 to 5.

## Revendications

1. Procédé d'arrosage pour l'arrosage automatique d'une surface, dans lequel
- une localisation de la surface est déterminée ;
- des données météorologiques pour l'emplacement localisé sont enregistrées automatiquement ;
- un système informatique (2, 3, 4) détermine, en utilisant un modèle d'évaporation prédéfini, les besoins en eau de la surface en fonction des données météorologiques ;
- la surface est arrosée automatiquement en fonction des besoins en eau déterminés ;
- la collecte automatique des données météorologiques, la détermination des besoins en eau et l'arrosage automatique de la surface ont lieu pendant une phase d'arrosage automatique ; **caractérisé en ce que**
- pendant une phase d'arrosage manuelle précédant la phase d'arrosage automatique, au moyen du système informatique (2, 3, 4)
- un besoin théorique en eau pour la surface est déterminé automatiquement ;
- une quantité d'eau appliquée manuellement sur la surface est déterminée ; et
- le modèle d'évaporation est généré ou adapté en fonction du besoin théorique en eau et de la quantité d'eau appliquée manuellement,
- pendant la phase d'arrosage manuelle, d'autres données météorologiques sont enregistrées pour l'emplacement localisé ;
- les besoins théoriques en eau sont déterminés au moyen du système informatique (2, 3, 4) en utilisant un modèle d'évaporation initial prédéfini en fonction desdites autres données météorologiques ; et
- le modèle d'évaporation initial est ajusté en fonction d'un écart entre les besoins théoriques en eau et la quantité d'eau distribuée manuellement afin d'obtenir le modèle d'évaporation.

2. Procédé d'arrosage selon la revendication 1, dans lequel, pour l'arrosage automatique de la surface, une pompe à eau (5) est activée automatiquement et/ou la puissance de la pompe à eau (5) est ajustée afin d'apporter de l'eau sur la surface en fonction des besoins en eau déterminés.

3. Procédé d'arrosage selon la revendication 2, dans lequel l'activation automatique et/ou l'adaptation de la puissance de pompage de la pompe à eau (5) est effectuée au moyen du système informatique (2, 3, 4) via une liaison de communication au moins partiellement sans fil entre le système informatique (2, 3, 4) et la pompe à eau (5).

4. Procédé d'arrosage selon l'une des revendications précédentes, dans lequel
- des données de prévisions météorologiques pour l'emplacement localisé sont automatiquement enregistrées ; et
- l'arrosage automatique de la surface est effectuée en fonction des besoins en eau déterminés en fonction des données de prévisions météorologiques.

5. Procédé d'arrosage selon l'une des revendications précédentes, dans lequel
- une entrée utilisateur concernant la localisation de la surface est enregistrée au moyen d'une interface utilisateur (4) ; et/ou
- des données de localisation sont enregistrées au moyen d'une unité réceptrice (10) pour un système mondial de navigation par satellite afin de déterminer la localisation de la surface ; et/ou
- des données de localisation cellulaire d'une cellule de réseau radio sont enregistrées au moyen d'un récepteur radio afin de déterminer la localisation de la surface.

6. Système d'arrosage (1) pour l'arrosage automatique d'une surface, dans lequel
- le système d'arrosage (1) comprend un système informatique (2, 3, 4) qui est conçu pour
- déterminer une localisation de la surface ;
- enregistrer automatiquement, pendant une phase d'arrosage automatique, des données météorologiques pour l'emplacement localisé ; et
- pendant la phase d'arrosage automatique, déterminer un besoin en eau pour la surface en fonction des données météorologiques en utilisant un modèle d'évaporation prédéfini ;
- le système d'arrosage (1) comprend un dispositif (5, 6) de distribution d'eau qui est conçu pour, sous la commande du système informatique (2, 3, 4), arroser automatiquement la surface pendant la phase d'arrosage automatique en fonction du besoin en eau déterminé ; **caractérisé en ce que**
- le système informatique (2, 3, 4) est conçu pour, pendant une phase d'arrosage manuelle précédant la phase d'arrosage automatique
- déterminer automatiquement un besoin théorique en eau pour la surface ;
- déterminer une quantité d'eau distribuée manuellement sur la surface ; et
- générer ou adapter le modèle d'évaporation en fonction des besoins théoriques en eau et de la quantité d'eau appliquée manuellement,
- pendant la phase d'arrosage manuelle, d'autres données météorologiques sont enregistrées pour l'emplacement localisé ;
- les besoins théoriques en eau sont déterminés au moyen du système informatique (2, 3, 4) en utilisant un modèle d'évaporation initial prédéfini en fonction desdites autres données météorologiques ; et
- le modèle d'évaporation initial est ajusté en fonction d'un écart entre les besoins théoriques en eau et la quantité d'eau distribuée manuellement afin d'obtenir le modèle d'évaporation.

7. Système d'arrosage (1) selon la revendication 6, dans lequel le dispositif (5, 6) de distribution d'eau comprend une pompe à eau à commande automatique (5) pour arroser automatiquement la surface en fonction des besoins en eau déterminés.

8. Système d'arrosage (1) selon la revendication 7, dans lequel
- le système informatique (2, 3, 4) est conçu pour transmettre au moins un signal de commande au dispositif (5, 6) de distribution d'eau en fonction du besoin en eau déterminé ; et
- le dispositif (5, 6) de distribution d'eau est conçu pour activer la pompe à eau (5) en fonction dudit au moins un signal de commande afin de distribuer de l'eau sur la surface en fonction du besoin en eau déterminé.

9. Système d'arrosage (1) selon la revendication 8, dans lequel la pompe à eau (5) comprend une interface de communication (9) pour la communication sans fil avec le système informatique (2, 3, 4), qui est conçue pour recevoir ledit au moins un signal de commande provenant du système informatique (2, 3, 4).

10. Système d'arrosage (1) selon l'une des revendications 7 à 9, dans lequel le dispositif (5, 6) de distribution d'eau comprend un dispositif (6) de répartition d'eau apte à être relié à la pompe à eau (5) afin de répartir l'eau sur la surface.

11. Système d'arrosage (1) selon l'une des revendications 6 à 10, dans lequel
- le système informatique (2, 3, 4) comprend une interface utilisateur (4) pour saisir une entrée utilisateur concernant la localisation de la surface ; et/ou
- le dispositif (5, 6) de distribution d'eau comprend une unité réceptrice (10) pour un système mondial de navigation par satellite, qui est agencée pour enregistrer des données de localisation du dispositif (5, 6) de distribution d'eau afin de déterminer la localisation de la surface.

12. Produit de programme d'ordinateur comprenant des instructions, **caractérisé en ce que** les instructions, lorsqu'elles sont exécutées par le système informatique (2, 3, 4) d'un système d'arrosage (1) selon l'une des revendications 6 à 11, amènent le système d'arrosage (1) à mettre en œuvre un procédé d'arrosage selon l'une des revendications 1 à 5.
